Europäisches Patentamt

European Patent Office

Office européen des brevets

(11) Veröffentlichungsnummer: **0 245 773 B1**

(19)

# EUROPÄISCHE PATENTSCHRIFT

(12)

(45) Veröffentlichungstag der Patentschrift: **27.10.93**

(21) Anmeldenummer: **87106597.5**

(22) Anmeldetag: **07.05.87**

(51) Int. Cl.5: **C08F 210/02**, //C08F2/00, (C08F210/02,220:12)

(54) Verfahren zur Herstellung von Copolymerisaten des Ethylens mit Acrylsäureestern in einem Röhrenreaktor bei Drücken oberhalb 500 bar.

(30) Priorität: **09.05.86 DE 3615562**

(43) Veröffentlichungstag der Anmeldung: **19.11.87 Patentblatt 87/47**

(45) Bekanntmachung des Hinweises auf die Patenterteilung: **27.10.93 Patentblatt 93/43**

(84) Benannte Vertragsstaaten: **AT BE DE FR GB NL**

(56) Entgegenhaltungen:
DE-A- 1 520 227    DE-A- 1 645 639
DE-A- 2 128 134    FR-A- 2 018 538
GB-A- 1 010 847    US-A- 3 725 378

(73) Patentinhaber: **BASF Aktiengesellschaft Carl-Bosch-Strasse 38 D-67063 Ludwigshafen(DE)**

(72) Erfinder: **Pfleger, Klaus, Dr. Ottostrasse 6 D-5047 Wesseling(DE)**
Erfinder: **Boettcher, Klaus, Dr. Antoniusstrasse 5 D-5047 Wesseling(DE)**

Erfinder: **Buechner, Oskar, Dr. Sickingenstrasse 4 D-6724 Dudenhofen(DE)**
Erfinder: **Kanne, Friedrich, Dr. Antoniusstrasse 3 D-5047 Wesseling(DE)**
Erfinder: **Kursawe, Siegfried Fasanenweg 4 D-5047 Wesseling(DE)**
Erfinder: **Zacher, Wieland, Dr. Lauenburgerstrasse 2 D-5047 Wesseling(DE)**
Erfinder: **Schulze, Kurt Hoholzstrasse 75 D-5300 Bonn 3(DE)**

**Beschreibung**

Die Erfindung betrifft ein Verfahren zur Herstellung von Copolymerisaten des Ethylens mit Acrylsäureestern durch Copolymerisaten von 100 Gewichtsteilen Ethylen mit 0,1 bis 25 Gewichtsteilen Acrylsäureester oder Lösungen von freier Acrylsäure in Acrylsäureestern in einem kontinuierlich betriebenen, rohrförmigen Polymerisationssystem bei Drücken von 500 bis 5000 bar und Temperaturen von 50 bis 450°C in Gegenwart von radikalisch zerfallenden Polymerisationsinitiatoren, indem man dem Polymerisationssystem durch einen Hauptstrom an dessen Einlaßstelle und gleichzeitig durch mindestens zwei Nebenströme hinter der Einlaßstelle entlang des Polymerisationssystems ein Gemisch aus Ethylen, Comonomeren, Initiator und gegebenenfalls Regler zuführt.

Es ist bereits bekannt, bei der Hochdruckpolymerisation von Ethylen den Ethylenstrom in mehrere Teilströme aufzuteilen und den Hauptstrom nach dem Erwärmen auf Anspringtemperatur in den Anfang eines röhrenförmigen Reaktors einzuleiten. Der andere bzw. die anderen Nebenströme werden dann bei diesem bekannten Verfahren an mehreren in Strömungsrichtung des polymerisierenden Ethylens hintereinander liegenden Stellen des Reaktors zugeführt. Das kalte Ethylen wird dabei an oder kurz hinter den Stellen des Reaktors eingeleitet, wo das Polymerisationsgemisch im Reaktor die maximal zulässige Polymerisationstemperatur überschritten hat. Dabei wird die Temperatur des kalt eingeleiteten Ethylens, welches ebenfalls Initiator enthält, so bemessen, daß die Temperatur nach der Zumischung im Reaktor nicht unter die Anspringtemperatur der Ethylenpolymerisation, die von dem verwendeten Katalysator abhängt, sinkt (vgl. GB-Patente 1 010 847, 915 210 und 1 347 361).

Auf diese Weise ist es möglich, den Umsatz des Ethylens zu Polyethylen pro Durchsatz zu erhöhen. Bei diesem bekannten Verfahren werden dem Ethylen z.B. vor oder nach der Komprimierung geringe Megen Luftsauerstoff als Polymerisationsinitiator zugegeben. Auch können statt Luftsauerstoff Peroxide oder Hydroperoxide oder Mischungen von Peroxidverbindungen zugefügt werden (vgl. US-Patent 3 725 378).

Es ist auch bereits bekannt, zur Herstellung von Ethylencopolymerisaten ein Gemisch aus Ethylen, Initiator, Regler und Acrylsäureester, einem rohrförmigen Polymerisationssystem an dessen Einlaßstelle und gleichzeitig an einer zweiten Stelle hinter der Einlaßstelle, wo die Reaktionstemperatur ein Maximum erreicht bzw. überschritten hat, zuzuführen (vgl. US-Patent 4 076 919). Dabei ist von Nachteil, daß bedingt durch das unterschiedliche Polymerisationsverhalten von Ethylen und Acrylsäureestern unter den Bedingungen der Hochdruckcopolymerisation Copolymerisate erhalten werden, in denen die Monomere unvorteilhaft verteilt, d.h. vorzugsweise in den niedermolekularen Anteilen der Copolymerisate einpolymerisiert sind. Dies hat negative Auswirkungen auf die mechanische Festigkeit der aus den Copolymerisaten erhaltenen Produkte.

Es ist ferner vorgeschlagen worden, die zur Copolymerisation mit Ethylen benötigte Menge an Acrylsäureester ausschließlich durch einen Nebenstrom dem Polymerisationssystem zuzudosieren (vgl. EP-Patent 96 221) oder der Einlaßstelle des Reaktors durch den Hauptstrom 55 bis 75 % und an einer zweiten Zuführstelle hinter der Einlaßstelle entlang dem Polymerisationssystem durch einen Nebenstrom 25 bis 45 % der Acrylsäureestermenge zuzuführen, wobei die Maximaltemperatur hinter der zweiten Zuführstelle 20 bis 50°C niedriger ist als die Maximaltemperatur vor der zweiten Zuführstelle (vgl. EP-Patent 98 488). Nach diesen Verfahren kann zwar der Umsatz gesteigert werden. Die erhaltenen Copolymerisate weisen jedoch noch Mängel in der mechanischen Festigkeit, vor allem in der Reißfestigkeit auf.

Der vorliegenden Erfindung liegt die Aufgabe zugrunde, ein Verfahren zur Copolymerisation von Ethylen mit Acrylsäureestern oder Gemischen von freier Acrylsäure in Acrylsäureestern in einem rohrförmigen Polymerisationssystem aufzufinden, bei dem unter Beibehaltung des guten allgemeinen Polymerisateigenschaften und des guten Umsatzes vor allem die mechanische Festigkeit wie Reißfestigkeit der aus dem Copolymerisat hergestellten Produkte verbessert werden.

Die Aufgabe wird erfindungsgemäß durch ein Verfahren gemäß Patentansprüche 1 bis 5 gelöst.

Unter Ethylen-Acrylsäureester-Copolymerisaten werden die Copolymerisate des Ethylens verstanden, die bei den angegebenen Temperatur- und Druckverhältnissen, bevorzugt bei einem Druck von 1500 bis 3000 bar und bei einer Temperatur zwischen 150 und 350°C, herstellbar sind. Der Ausdruck Ethylen-Acrylsäureester-Copolymerisate umfaßt Copolymerisate mit Gehalten an einpolymerisiertem Comonomerenanteil von 0,2 bis zu 25,0, bevorzugt 0,5 bis 20,0 Gewichtsprozent, die einen Schmelzindex von 0,1 bis 25 g/10 min, bestimmt nach ASTM-D 1238-65 T bei einer Temperatur von 190°C und einem Auflagegewicht von 2,16 kg, und eine Dichte von 0,890 bis 0,934 $g/cm^3$, gemessen nach DIN 53 479, aufweisen.

Als Acrylsäureester kommen sämtliche mit Ethylen bei den angegebenen Temperaturen und Druckverhältnissen copolymerisierbare Acrylsäureester in Betracht. Solche Comonomere sind z.B. Ester der Acryl- und Methcrylsäure mit $C_1$- bis $C_8$-, vorzugsweise $C_1$- bis $C_6$-Alkanolen. Insbesondere bevorzugt sind Methyl- und n-Butylacrylat. Es ist auch möglich Gemische von Acrylsäureestern oder Lösungen von freier Acrylsäure in Acrylsäureestern einzusetzen. Bevorzugt enthalten die Acrylsäureester-Acrylsäurelösungen bis zu 50 Gew.%, insbesondere bis zu 30 Gew.% Acrylsäure.

Das Ethylen wird mit den Acrylsäureestern in Gegenwart radikalischer Initiatoren copolymerisiert. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 2 bis 100 Mol-ppm, bezogen auf das zu polymerisierende Ethylen. In Betracht kommen außerdem Peroxide und andere Radikalbildner sowie Gemische von Peroxiden, die unterschiedliche Zersetzungspunkte haben und Hydroperoxide sowie Mischungen aus Sauerstoff und Peroxiden und/oder Hydroperoxiden. Als Beispiele für Peroxide und Hydroperoxide seien genannt: tert.Butylperoxypivalat, Di-tert.-butylperoxid, tert.-Butylhydroperoxid, tert.-Butylperbenzoat, p-Methanhydroperoxid und Dilauroylperoxid. Unter radikalischen Polymerisationsinitiatoren sollen auch Verbindungen wie Azoisobuttersäuredinitril verstanden werden. Man kann auch Mischungen aus Sauerstoff und einem oder mehreren Peroxiden verwenden. Bevorzugt wird die Copolymerisation des Ethylens mit Acrylsäureestern durch Luftsauerstoff initiiert.

Üblicherweise arbeitet man in Gegenwart von Polymerisationsreglern. Mit Hilfe der Polymerisationsregler ist es möglich, den Schmelzindex der entstehenden Ethylencopolymerisate einzustellen. Als Regler eignen sich beispielsweise Wasserstoff, Ketone, Aldehyde, Alkohole, Ether oder normale und verzweigte Kohlenwasserstoffe. Vorzugsweise verwendet man Propan, Propylen, Methylethylketon oder Propionaldehyd. Die Polymerisationsregler werden im allgemeinen in Mengen von 0,2 bis 5 Molprozent, bezogen auf das zu polymerisierende Ethylen eingesetzt. In einer besonderen Ausgestaltung des Verfahrens kann aber auch das eingesetzte Comonomere selbst als Regler dienen, d.h. man arbeitet ohne zusätzliche Polymerisationsregler.

Die Polymerisation wird im allgemeinen in Abwesenheit eines Lösungsmittels durchgeführt. Die geringen Mengen eines inerten Lösungsmittels, wie Benzol, Mineralöl oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Das Verfahren läßt sich unter Anwendung der üblichen kontinuierlich betriebenen röhrenförmigen Hochdruckpolymerisationssysteme (Rohrreaktoren) ausführen. Unter Rohrreaktoren versteht man rohrförmige Polymerisationsgefäße, deren Verhältnis Länge zum Durchmesser der druckfesten Rohre im Bereich 10 000 bis 60 000 zu 1 liegt. Angaben über Ethylenhochdruckpolymerisationsverfahren, bei denen Rohrreaktoren benutzt werden, finden sich beispielsweise in "Ullmanns Encyklopädie der technischen Chemnie", 1980, 4. Auflage, Band 19, Seiten 167 bis 178, Verlag Chemie GmbH, D-6940 Weinheim.

Das gasförmige Gemisch aus Ethylen, Acrylsäureester, Initiator und nötigenfalls Regler wird nach bekannten Verfahren an der Einlaßstelle und gleichzeitig an einer zweiten Stelle hinter der Einlaßstelle entlang des Rohrreaktors in Strömungsrichtung des polymerisierenden Ethylens, wo die Reaktionstemperatur ein Maximum überschritten hat, dem Reaktor zugeführt. Unter Einlaßstelle wird im allgemeinen der Anfang des rohrförmigen Reaktors verstanden. Der Hauptstrom wird dabei am Anfang des Reaktors zugeleitet, der Nebenstrom wird dem Reaktor in bekannter Weise an einer Stelle, hinter der sich ein Temperaturmaximum ausbildet, zugeführt. Durch diese Maßnahme wird die Reaktionsführung des bekannten Zweizonen-Rohrreaktors erhalten.

In dem erfindungsgemäß verbesserten Verfahren wird nun so verfahren, daß zugeführt werden Nebenströme (I) jeweils an Stellen, wo die Reaktionstemperatur ein durch die Polymerisationswärme entstandenes Temperaturmaximum gerade überschritten hat und Nebenströme (II) an Stellen, die - relativ zur Fließrichtung des Ethylens - vor den Zuführstellen der Nebenströme (I) und vor dem jeweiligen Temperaturmaximum liegen. Nach bevorzugter Verfahrensweise wird ein Nebenstrom (I) an einer Stelle, wo die Reaktionstemperatur ein Temperaturmaximum gerade überschritten hat und ein Nebenstrom (II) vor diesem Temperaturmaximum zugeführt. Diese Verfahrensweise ist in sog. Zweizonenreaktoren anwendbar, wobei der Nebenstrom (II) zusätzlich vor dem Temperaturmaximum in die laufende Reaktion eingespeist wird. Bevorzugt wird bei dem erfindungsgemäßen Verfahren der Nebenstrom (I) an einer Stelle eingeführt, wo das Reaktionsgemisch im Rohrreaktor eine Temperatur von 290 bis 310°C aufweist und der Nebenstrom (II) an einer davorliegenden Stelle, wo im Reaktionsgemisch eine um 30 bis 60, insbesondere 45 bis 55°C niedere Temperatur herrscht als beim Temperaturmaximum. Insbesondere bevorzugt ist auch eine Verfahrensweise, bei der die zur Copolymerisation benötigte Menge Acrylsäureester überwiegend durch die Nebenströme (I und II) zugeführt wird. Das Verhältnis der Gasströme Hauptstrom zu Nebenstrom I und Nebenstrom II wird im Bereich von 10:9:1 bis 10:5:5 gehalten.

Bei der Einleitung des Nebenstroms (II) in den Reaktor vorzugsweise bei einer Temperatur des Reaktionsgemisches von 250 bis 270°C wird die Temperatur des Gemisches zunächst auf 210 bis 240°C abgesenkt und erreicht sodann Maxima von 290 bis 310°C, insbesondere 300 bis 310°C.

Durch die erfindungsgemäße Maßnahme kann eine Verbesserung der mechanischen Festigkeit, vor allem der Reißfestigkeit und Steifigkeit der aus dem Ethylen-Acrylsäureester-Copolymerisat hergestellten Produkte erreicht werden.

Das Ethylen wurde gemäß Beispielen zunächst in zwei separaten Gasströmen mit der angegebenen Sauerstoff- und Comonomerenmenge versetzt und bis auf den Reaktionsdruck von 2200 bar aufkomprimiert. Ein Nebenstrom (II) wurde vor der Vereinigung der aufkompromierten Gasströme abgezweigt und an der Einspeisestelle vor dem Temperaturmaximumn in die "laufende" Reaktion, ein anderer Nebenstrom (I) kurz hinter dem Temperaturmaximum eingespeist; der Hauptstrom wird am Reaktoreingang zugeführt. Man arbeitet mit Röhrenreaktoren bekannter Bauart. Beim Zweizonenreaktor liegt die Einspeisstelle des Nebenstroms (II) vor dem Temperaturmaximum der ersten Reaktionszone, es ist auch möglich, für beide Reaktionszonen mit jeweils einer Einspeisestelle vor dem entsprechenden Temperaturmaximum zu arbeiten.

Der Reaktor hatte ein Längen-/Durchmesserverhältnis von etwa 10 500:1. Zur Abführung eines Teiles der Polymerisationswärme wurden die Rohrwände von außen mit Wasser gekühlt. Bei der Ausführung des Vergleichsbeispiels wurde die entsprechende Acrylsäureestermenge nur dem Gasstrom zugegeben, der zur Einlaßstelle am Eingang des Reaktors und dem Nebenstrom I führt; es wurde ohne Nebenstrom II gefahren. Das anfallende Copolymerisat wurde in bekannter Weise in den dem Reaktor nachgeschalteten Abscheidern vom nicht umgesetzten Monomeren abgetrennt.

Beispiel 1

Dem oben beschriebenen Reaktor wurde am Eingang ein Hauptstrom, bestehend aus 9 723 Gewichtsteile/Stunde Ethylen und 277 Gewichtsteile/Stunde n-Butylacrylat sowie als Polymerisationsstarter 11,6 Mol-ppm Sauerstoff, bezogen auf Ethylen, zugegeben. Durch die Nebenströme (I und II) wurde dem Reaktor ein Gemisch, bestehend aus 9506 Gewichtsteilen/Stunde Ethylen, 494 Gewichtsteilen/Stunde n-Butylacrylat und 7 Mol-ppm Sauerstoff bezogen auf Ethylen, zugegeben.

Bei einem Reaktionsdruck von 2200 bar, gemessen am Reaktoreingang, erreichte das Reaktionsgemisch vor der 1. Einspeisstelle durch die freiwerdende Reaktionswärme eine Temperatur von 260°C, durchlief nach Zugabe des Nebenstromes (II) einen Temperaturbereich von 220 bis 230°C und erreichte danach in der Mitte der Reaktionszone bei der 2. Einspeisstelle eine maximale Temperatur von 300°C.

Der Nebenstrom I enthielt 374 Gewichtsteile n-Butylacrylat, der Nebenstrom II enthielt 120 Gewichtsteile n-Butylacrylat.

Auf diese Weise wurden 4650 Gewichtsteile eines Ethylen/n-Butylacrylat-Copolymerisates erhalten, dessen Acrylatgehalt 16,4 Gew.% vorzugsweise im hochmolekularen Copolymerisat betrug.

Die Dichte des gewonnenen Copolymerisates betrug 0,9242 g/cm$^3$, gemessen nach DIN 53 479; der Schmelzindex lag bei 1,65 g/10 min., gemessen nach DIN 53 735.

Das gewonnene Copolymerisat besitzt eine relativ enge Molekulargewichtsverteilung, der Hauptanteil des einpolymerisierten Acrylates liegt in höher-molekularen Copolymerisat. Das Elutionsdiagramm (vgl. Zeichnung) wurde mit Hilfe der Gelpermeationschromatographie gewonnen. Die Molgewichtsverteilung wird dabei über die relative Änderung des Brechungsindexes der eluierten Fraktionen im Vergleich zum Lösungsmittel und der Gehalt an Copolymeren durch die relative Änderung der Intensität im IR-Spektrum bestimmt.

Die durchgezogenen Linien (Beispiel 1) und die durchgezogene Linie mit Kreuzen (Vergleichsbeispiel 1) zeigen die Molgewichtsverteilung, die unterbrochenen Linien (Striche Beispiel 1, Kreuze Vergleichsbeispiel 1) geben die Verteilung einpolymerisierten Acrylats wieder.

Für das erhaltene Produkt wurden Reißfestigkeitswerte von 19,6 N/mm$^2$, gemessen an 0,5 mm dicken Prüfblättchen (Prüfkörper Nr. 4) gemäß DIN 53 455, ermittelt.

Beispiel 2

Es wurde analog zum Beispiel 1 verfahren, wobei die Gasströme folgende Mengen enthielten:

|  | Ethylen | n-Butylacrylat |
|---|---|---|
| Hauptstrom | 9 715 Gewichtsteile | 285 Gewichtsteile |
| Nebenstrom I | 6 005 Gewichtsteile | 295 Gewichtsteile |
| Nebenstrom II | 3 530 Gewichtsteile | 170 Gewichtsteile |

Die Zugabe des Nebenstromes II in die laufende Reaktion erfolgte bei einer Temperatur von 245°C; danach wurde in der Mitte der Reaktionszone eine maximale Temperatur von 305°C erreicht.

Es wurden 4700 Gewichtsteile eines Ethylen/n-Butylacrylat-Copolymerisats erhalten, dessen Acrylatgehalt 15,7 Gew.% (vorzugsweise im hochmolekularen Polymerisat) betrug.

Die Dichte des gewonnenen Copolymerisates betrug 0,9238 g/cm$^3$, gemessen nach DIN 53 479; der Schmelzindex lag bei 1,48 g/10 min., gemessen nach DIN 53 735.

Das gewonnene Produkt besitzt ebenfalls eine relativ enge Molekulargewichtsverteilung, der Hauptanteil des einpolymerisierten Acrylates liegt in höhermolekularem Copolymerisat.

Für das erhaltene Copolymerisat werden Reißfestigkeitswerte von 21,6 N/mm$^2$, gemessen an 0,5 mm dicken Prüfblättchen (Prüfkörper Nr. 4) gemäß DIN 53 455, ermittelt.

Vergleichsbeispiel 1

Dem Reaktor wurden am Eingang ein Hauptstrom bei einem Reaktionsdruck von 2200 bar ein Gemisch von 9860 Gewichtsteile/Stunde Ethylen und 140 Gewichtsteile/Stunde n-Butylacrylat sowie als Polymerisationsstarter 10,2 Mol-ppm Sauerstoff, bezogen auf Ethylen, zugegeben. Über den Nebenstrom II wurde nicht eingespeist.

Über den Nebenstrom II wurde nichts eingespeist.

Das Reaktionsgemisch erreichte eine maximale Temperatur von 295°C; über den Nebenstrom I wurde ein Gemisch von 9440 Gewichtsteile Ethylen und 560 Gewichtsteile n-Butylacrylat nach diesem Temperaturmaximum eingespeist.

Es wurden 4150 Gewichtsteile eines Ethylen/n-Butylacrylat-Copolymerisates erhalten, dessen Acrylatgehalt 16,5 Gew.% (vorzugsweise im niedermolekularen Copolymerisat) betrug.

Die Dichte des Produktes betrug 0,9240 g/cm$^3$, gemessen nach DIN 53 479. Der Schmelzindex lag bei 1,55 g/10 min., gemessen nach DIN 53 735. Aus dem Elutionsdiagramm geht hervor, daß der Hauptteil des einpolymerisierten Acrylates nicht im höhermolekularen Copolymerisat liegt. Für das erhaltene Produkt wurden Reißfestigkeitswerte von 11,5 N/mm$^2$, gemessen an 0,5 mm dicken Prüfblättchen gemäß DIN 53 455, ermittelt.

Vergleichsbeispiel 2

Dem Reaktor wurde bei einem Reaktionsdruck von 2200 bar am Eingang (Hauptstrom) 10 000 Gewichtsteile Ethylen sowie 11,4 Mol-ppm Sauerstoff, bezogen auf Ethylen, zugeführt.

Der Nebenstrom II blieb außer Betrieb. Das Comonomere n-Butylacrylat wurde ausschließlich über den Nebenstrom I zugesetzt (670 Gewichtsteile n-Butylacrylat und 9330 Gewichtsteile Ethylen).

Das Reaktionsgemisch erreicht eine maximale Reaktionstemperatur von 300°C.

Es wurden 4060 Gewichtsteile eines Ethylen/n-Butylacrylat-Copolymerisates erhalten, dessen Acrylatgehalt 16,2 Gew.% (vorzugsweise im niedermolekularen Copolymerisat) betrug.

Die Dichte des Copolymerisates betrug 0,9243 g/cm$^3$, gemessen nach DIN 53 479. Der Schmelzindex lag bei 1,78 g/10 min., gemessen nach DIN 53 735.

Für das erhaltene Copolymerisat wurden Reißfestigkeitswerte von 7 bis 8 N/mm$^2$, gemessen an 0,5 mm dicken Prüfblättchen, gemäß DN 53 455 ermittelt.

Übersicht

1) Anteile n-Butylacrylat in Gew.% zugesetzt im

| Hauptstrom | Nebenstrom I | Nebenstrom II | Beispiele |
|---|---|---|---|
| 35,9 | 48,5 | 15,6 | 1 |
| 38,0 | 39,3 | 22,7 | 2 |
| 20 | 80 | 0 | Vergleich 1 |
| 0 | 100 | 0 | Vergleich 2 |

2) Gegenüberstellung der Eigenschaften der erhaltenen Copolymerisate

| Beispiel | Schmelzindex g/10 min. | Dichte g/cm$^3$ | Acrylat-gehalt (% nBA) | Reißfestig-keit N/mm$^2$ | Acrylat bevorzugt einpolymerisiert im |
|---|---|---|---|---|---|
| 1* | 1,65 | 0,9242 | 16,4 | 19,6 | hochmolekularen Polymerisat |
| 2 | 1,48 | 0,9238 | 15,7 | 21,6 | hochmolekularen Polymerisat |
| Vergleich 1* | 1,55 | 0,9240 | 16,5 | 11,5 | niedermolekularen Polymerisat |
| Vergleich 2 | 1,78 | 0,9243 | 16,2 | 7-8 | niedermolekularen Polymerisat |

\* Elutionsdiagramme siehe Zeichnung

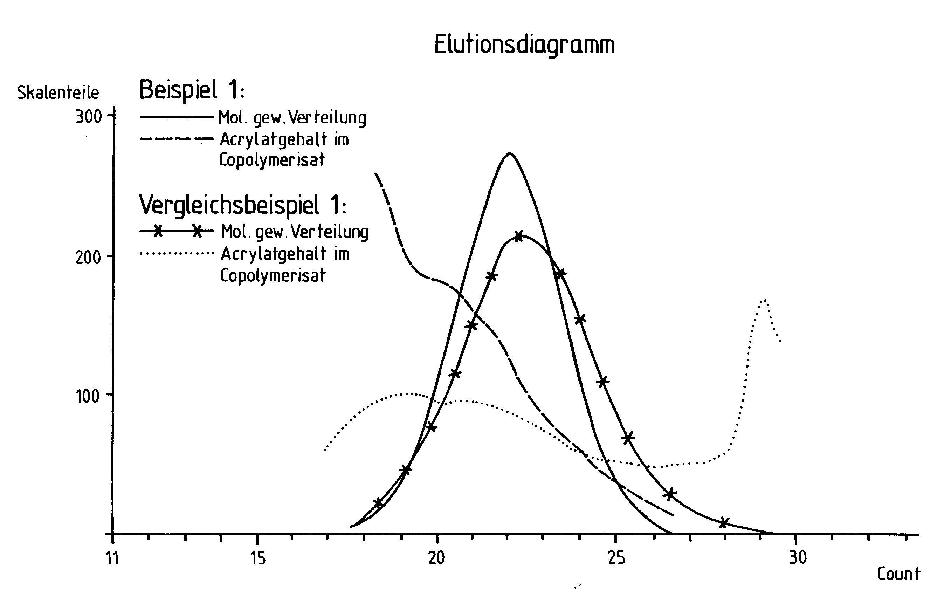

**Patentansprüche**

1. Verfahren zur Herstellung von Copolymerisaten des Ethylens mit Acrylsäureestern durch Copolymerisation von 100 Gewichtsteilen Ethylen mit 0,1 bis 25,0 Gewichtsteilen Acrylsäureester oder Lösungen von freier Acrylsäure in Acrylsäureestern in einem kontinuierlich betriebenen, rohrförmigen Polymerisationssystem bei Drücken von 500 bis 5000 bar und Temperaturen von 50 bis 450°C in Gegenwart von radikalisch zerfallenden Polymerisationsinitiatoren, indem man dem Polymerisationssystem durch einen Hauptstrom an dessen Einlaßstelle und gleichzeitig durch mindestens zwei Nebenströme hinter der Einlaßstelle entlang des Polymerisationssystems ein Gemisch aus Ethylen, Comonomeren, Initiator und gegebenenfalls Regler zuführt, dadurch gekennzeichnet, daß zugeführt werden Nebenströme (I) jeweils an Stellen, wo die Reaktionstemperatur ein durch die Polymerisationswärme entstandenes Temperaturmaximum von 290 bis 310°C gerade überschritten hat und Nebenströme (II) an Stellen, die - relativ zur Fließrichtung des Ethylens - vor den Zufuhrstellen der Nebenströme (I) und vor dem jeweiligen Temperaturmaximum liegen.

2. Verfahren nach Anspruch 1, dadurch gekennzeichnet, daß ein Nebenstrom (I) an einer Stelle, wo die Reaktionstemperatur ein Temperaturmaximum gerade überschritten hat und ein Nebenstrom (II) vor diesem Temperaturmaximum zugeführt wird.

6

3. Verfahren nach Anspruch 1, dadurch gekennzeichnet, daß der Nebenstrom (I) an einer Stelle zugeführt wird, wo das Reaktionsgemisch eine Temperatur von 290 bis 310°C aufweist und der Nebenstrom (II) an einer davor liegenden Stelle, wo im Reaktionsgemisch eine um 30 bis 60°C tiefere Temperatur herrscht.

4. Verfahren nach Anspruch 1, dadurch gekennzeichnet, daß die zur Copolymerisation benötigte Menge Comonomeren überwiegend durch die Nebenströme (I und II) zugeführt wird.

**Claims**

1. A process for preparing a copolymer of ethylene with an acrylic ester by copolymerizing 100 parts by weight of ethylene with from 0.1 to 25.0 parts by weight of an acrylic ester or of a solution of free acrylic acid in an acrylic ester in a continuous tubular polymerization system at pressures of from 500 to 5,000 bar and at temperatures of from 50 to 450°C in the presence of a polymerization initiator which decomposes into free radicals, by feeding a mixture of ethylene, comonomer, initiator and, if appropriate, regulant into the polymerization system in the form of a main stream at the inlet point thereof and at the same time in the form of two or more secondary streams downstream of the inlet point along the polymerization system, which comprises feeding in secondary streams (I) in each case at points where the reaction temperature has just exceeded a maximum temperature of from 290 to 310°C due to the heat of polymerization and secondary streams (II) at points which, relative to the direction of flow of the ethylene, are positioned upstream of the feed points of secondary streams (I) and upstream of the respective maximum temperature.

2. A process as claimed in claim 1, wherein a secondary stream (I) is fed in at a point where the reaction temperature has just exceeded a maximum temperature and a secondary stream (II) is fed in upstream of this maximum temperature.

3. A process as claimed in claim 1, wherein secondary stream (I) is fed in at a point where the reaction mixture has a temperature of from 290 to 310°C and secondary stream (II) is fed in at a point upstream thereof where the reaction mixture is cooler by from 30 to 60°C.

4. A process as claimed in claim 1, wherein the amount of comonomer required for copolymerization is predominantly fed in through secondary streams (I and II).

**Revendications**

1. Procédé de préparation de copolymères de l'éthylène et d'esters d'acide acrylique, par copolymérisation de 100 parties en poids d'éthylène avec 0,1 à 25,0 parties en poids d'ester d'acide acrylique ou de solutions d'acide acrylique libre dans des esters d'acide acrylique, dans un système de polymérisation tubulaire fonctionnant en continu, sous des pressions de 500 à 5000 bar et à des températures de 50 à 450°C, en présence d'amorceurs radicalaires de polymérisation, procédé dans lequel on introduit un mélange d'éthylène, de comonomères, d'amorceur et éventuellement de régulateur dans le système de polymérisation, par un courant principal au point d'entrée de celui-ci et, en même temps, par au moins deux courants secondaires en aval du point d'entrée le long du système de polymérisation, caractérisé en ce qu'on introduit des courants secondaires (I) en des points où la température de réaction vient de dépasser un maximum de température de 290 à 310°C, dû à la chaleur de polymérisation, et on introduit des courants secondaires (II) en des points qui sont situés - en considérant le sens d'écoulement de l'éthylène - avant les points d'introduction des courants secondaires (I) et avant chaque maximum de température.

2. Procédé selon la revendication 1, caractérisé en ce qu'un courant secondaire (I) est introduit en un point où la température de réaction vient de dépasser un maximum de température, et un courant secondaire (II) est introduit avant ce maximum de température.

3. Procédé selon la revendication 1, caractérisé en ce que le courant secondaire (I) est introduit en un point où le mélange réactionnel présente une température de 290 à 310°C et le courant secondaire (II) est introduit en un point situé en amont, où il règne, dans le mélange réactionnel, une température inférieure de 30 à 60°C.

**4.** Procédé selon la revendication 1, caractérisé en ce que la quantité de comonomères nécessaire pour la copolymérisation est introduite par les courants secondaires (I et II).

Elutionsdiagramm